# EUROPEAN PATENT SPECIFICATION

(11) **EP 3 496 957 B1**
(45) Date of publication and mention of the grant of the patent: **06.01.2021**
(21) Application number: 17840048.7
(22) Date of filing: 03.08.2017
(51) Int. Cl.: B60C 11/00, B60C 1/00, B60C 11/12, C08K 3/04, C08K 3/34, B60C 11/14, C08K 3/36, C08K 5/541, C08K 9/06, C08K 7/00

(54) **PNEUMATIC TIRES WITH LOW TEARING BASE COMPOUND FOR TIRE TREAD**
LUFTREIFEN MIT REISSARMER GRUNDMISCHUNG FÜR REIFENLAUFFLÄCHE
PNEUMATIQUES COMPRENANT UN COMPOSÉ DE BASE À FAIBLE DÉCHIRURE POUR BANDE DE ROULEMENT DE PNEU

(30) Priority: 08.08.2016 US 201662371999 P
(43) Date of publication of application: 19.06.2019
(73) Proprietor: Bridgestone Bandag, LLC, Muscatine, IA 52761 (US)
(72) Inventor: BENDER, David L., Muscatine, Iowa 52761 (US)
(74) Representative: Oxley, Robin John George
(86) International application number: PCT/US2017/045316
(87) International publication number: WO 2018/031369

(56) References cited:
- EP-A1- 2 607 098
- EP-A1- 3 000 617
- WO-A1-2017/029072
- WO-A1-2017/043007
- JP-A- 2008 007 047
- US-A- 6 080 474
- US-A1- 2011 162 770
- US-A1- 2012 090 749
- US-A1- 2012 132 332

## Description

### TECHNICAL FIELD

The present disclosure relates to pneumatic tires having a tire tread portion and a plurality of sipes on the tread extending from the outer surface of the tread radially inwardly, and more particularly, to pneumatic tires having sipes exposed to a rubber composition in the tread portion, wherein the rubber composition contains a platelet type filler to enhance the sipe tear strength.

### BACKGROUND

Siping of tire treads have long been known as a method of improving snow-traction, wet-traction, ice-braking, and tread wear tire performances. One drawback with siping is the creation of a zone on the surface of the sipe elements that can be prone to initiation of cracking and tearing. As the sipes are exposed to concentrated stresses during operation, portions of the sipes, can develop a tear. As a tear grows it can result in the tearing away of a siped tread element from the tread.

Sipe tear can often develop at or near the base of a sipe. To combat the tearing away of a siped tread element, one method is to adjust sipe patterns and dimensions. Sipe depth can be reduced to prevent the development of a tear deep into the tread portion of a tire. Although control of the sipe depth can address the frequency and location of tearing, reduction of sipe depth has the disadvantage of lessening the benefit of the sipe over the life of the tire. Cutting a sipe to a depth of less than the usage tread portion will allow the later portion of the tread life to be without a sipe on the tread surface. A decrease in the amount of tread life having a sipe present on the ground-contacting surface of the tire can reduce tire performance.

It is an objective of the present disclosure to overcome one or more difficulties related to the prior art. A tire having improved tear resistance of the sipes can have a longer service life and the ability of increasing sipe depth can lengthen the use of a tread having a sipe on the ground-contacting surface. It has been found that addition of talc in a rubber composition has increased resistance to sipe edge tearing of the tire tread, which can lead to a longer service life for a tire that benefits from sipes on the ground-contacting surface. The present disclosure also addresses a tread with a base compound that incorporates talc that extends into the zone more prone to tearing. In this manner, the tire tread with sipe design provides increased resistance to sipe tearing without negatively impacting the tire tread wear performance. Furthermore, the sipe pattern design together with the incorporation of talc in the rubber tread base compound may enable production of pre-cured treads using synthetic rubber to replace natural rubber that meet the Smartway requirements with potential cost reduction.

In one example, the present disclosure describes a tire tread with sipes extending from an outer surface radially inwardly to contact or extend into the tread base layer or under tread layer, wherein the tread base or under layer is made of a rubber composition containing talc to enhance the sipe tear strength.

### SUMMARY

In a first aspect, there is a pneumatic tire that includes a tread portion, the tread portion having a tread cap layer and a tread base layer; the tread cap layer having a ground-contact surface, and the tread cap layer being composed of a tread cap composition, the tread cap composition containing 100 parts of at least one diene-based elastomer and less than 0.5 parts by weight of a platelet type filler, for example, talc, based on 100 parts by weight of the elastomer; the tread base layer underlying the tread cap layer, and the tread base layer being composed of a tread base composition, the tread base composition containing 100 parts of at least one diene-based elastomer and a platelet type filler, for example, talc, the talc in the tread base composition being present in the range of 0.5 to 20 parts by weight based on 100 parts by weight of the elastomer in the tread base composition. The platelet type fillers being selected from the group of talc, clay, mica, graphene or a combination thereof.

In an example of aspect 1, the tread portion may further have an under tread layer underlying the tread base layer, and the under tread layer being composed of an under tread composition.

In another example of aspect 1, the tread cap layer is in direct contact with the tread base layer.

In another example of aspect 1, the tread base layer is in direct contact with the under tread layer.

In another example of aspect 1, the tread base layer is in contact with a sipe positioned in the tread portion. The sipe can have an open end and a closed end.

In another example of aspect 1, the sipe extends from the ground-contact surface of the tread cap layer and into the tread base layer. The sipe can have an open end flush with the ground-contact surface of the tread cap layer.

In another example of aspect 1, the sipe has a closed terminating end in contact with the tread base layer.

In another example of aspect 1, the closed terminating end of the sipe extends into the tread base layer.

In another example of aspect 1, the sipe terminates in the tread base layer.

In another example of aspect 1, the under tread layer is in contact with a sipe positioned in the tread portion.

In another example of aspect 1, the sipe has a closed terminating end in contact with the under tread layer.

In another example of aspect 1, the sipe terminates in the under tread layer.

In another example of aspect 1, the under tread composition contains 100 parts by weight of at least one diene-based elastomer and talc, the talc in the under tread composition is present in the range of 0.5 to 20 parts by weight based on 100 parts by weight of the elastomer in the under tread composition.

In another example of aspect 1, the tread cap composition is substantially free of a platelet type filler, for example, talc.

In another example of aspect 1, the under tread composition is substantially free of a platelet type filler, for example, talc.

In another example of aspect 1, the talc content in the tread base composition is in the range from 1 to 10 parts by weight, based on the 100 parts by weight of the elastomer.

In another example of aspect 1, the talc in the tread base having at least one of the properties of a mean particle size diameter in the range of 1 to 10 microns or a surface area of 5 to 20 m²/g.

In another example of aspect 1, the tread base composition further contains carbon black in the range from 15 to 80 parts by weight, based on 100 parts by weight of the elastomer.

In another example of aspect 1, the diene-based elastomer in the tread base composition contains 10 to 100 parts by weight of styrene butadiene rubber, 10 to 100 parts by weight of polyisoprene rubber, 5 to 75 parts by weight of polybutadiene rubber, or 1 to 100 parts by weight of natural rubber, based on 100 parts of the elastomer.

In another example of aspect 1, the tread cap composition further contains a reinforcing filler, and the reinforcing filler includes carbon black or silica.

In another example of aspect 1, the reinforcing filler in the tread cap composition is in the range of 25 to 125 parts by weight, based on 100 parts by weight of the elastomer.

The first aspect may be provided alone or in combination with any one or more of the examples of the first aspect discussed above.

The accompanying drawings are included to provide a further understanding of principles of the invention, and are incorporated in and constitute a part of this specification. The drawings illustrate one or more embodiment(s), and together with the description serve to explain, by way of example, principles and operation of the invention. It is to be understood that various features disclosed in this specification and in the drawings can be used in any and all combinations. By way of non-limiting example the various features may be combined with one another as set forth in the specification as aspects.

### BRIEF DESCRIPTION OF THE DRAWINGS

The above description and other features, aspects and advantages are better understood when the following detailed description is read with reference to the accompanying drawings, in which:
FIG. 1 is a cross-sectional view of a tire along the width direction showing sipes extending into a tread base layer and under tread layer.
FIG. 2 shows a cross-sectional view showing one example of a tire tread portion having a tread cap layer, a tread base layer and an under tread layer with multiple sipes of varying depths arranged in the tread portion.

### DETAILED DESCRIPTION

The terminology as set forth herein is for description of the embodiments only and should not be construed as limiting the invention as a whole. Any reference to the "invention" may refer to one or more, but not necessarily all, of the inventions defined by the claims.

Herein, when a range such as 5-25 (or 5 to 25) is given, this means preferably at least or more than 5 and, separately and independently, preferably not more than or less than 25. In an example, such a range defines independently at least 5, and separately and independently, not more than 25.

Unless specified otherwise, phr of an ingredient in a rubber composition means part by weight of the ingredient based on 100 parts by weight of total elastomers in the rubber composition. In an example, a rubber composition has 5 phr of a platelet type filler, (e.g., talc) means that the rubber composition has 5 parts by weight of talc based on 100 parts by weight of elastomers.

Tire treads are often molded in such a way to create a pattern of tread grooves that form voids for the drainage of water and to provide tread groove edges to give the tire traction on road surfaces. Grooves are typically wide and deep enough to remain open as the tire wears through the portion of the tread contacting the roadway. Often the deepest grooves are circumferentially continuous grooves throughout the tread portion, but can be inclined or lateral extending grooves depending on the tread pattern design.

Sipes are thin grooves or slits that are cut across or molded into a tire tread surface. Sipes can be narrow, for example, sipes can close in the footprint or road contact patch of a tire as the tire rotates during operation. Sipes do not drain water in the same way as wider grooves do, rather the sipes form additional edges in the tire rib or block shaped tread elements. The additional edges formed by sipes can improve tire traction performance in most all road conditions, especially for driving in snowy, icy or wet road conditions. The sipes may also improve the tire tread wear performance, for example, reduce irregular wear of the tire tread. Siping can further increase the flexibility of the tread and impact the way tread contacts the ground. For example, the sipes may also reduce tire friction heat and thus reduce tire heat buildup during operation, and therefore extend the life of the tires.

A disadvantage of tire siping is possible creation of a zone on the surface of the sipe element that is more prone to initiation of tearing, for example, at the base or closed end of the sipe that terminates in the tread portion. As a tear grows it can result in the tearing away of a siped tread element from the tread and compromise tire performance. An approach for reducing the potential for sipe tearing is to reduce the sipe depth to prevent the development of a tear deep into the tread portion of a tire. Although control of the sipe depth can address the frequency and location of tearing, reduction of sipe depth has the disadvantage of lessening the benefit of the sipe over the life of the tire. Cutting a sipe to a depth of less than the usable tread portion can allow the later portion of the tread life to be without a sipe at the tread surface. A decrease in the amount of tread life having a sipe present on the ground-contacting surface of the tire can reduce tire performance.

The present disclosure relates to addressing the sipe tearing issue by incorporating a crack stopping component into the rubber composition portion in contact with the sipe zone more prone to tearing to slow the propagation of the tearing. The incorporation of a platelet type filler, for example talc, into the rubber composition can provide increased resistance to sipe edge tearing in tire tread portion. Because tread wear performance can deteriorate with the incorporation of a platelet type filler in the ground contacting portion of the tread portion, the platelet filler can be selectively incorporated into one or more tread portion layers below the tread cap. That is, a platelet filler can be incorporated into the rubber composition in contact with the base or closed terminating end of a sipe. For example, a platelet filler can be incorporated into one or more layers underlying the tread cap, e.g., a tread base layer, under tread layer, or both. Platelet type fillers can include clays, micas, talcs, graphenes, or combinations thereof. The platelet fillers are non-spherical and talc is a preferred platelet filler.

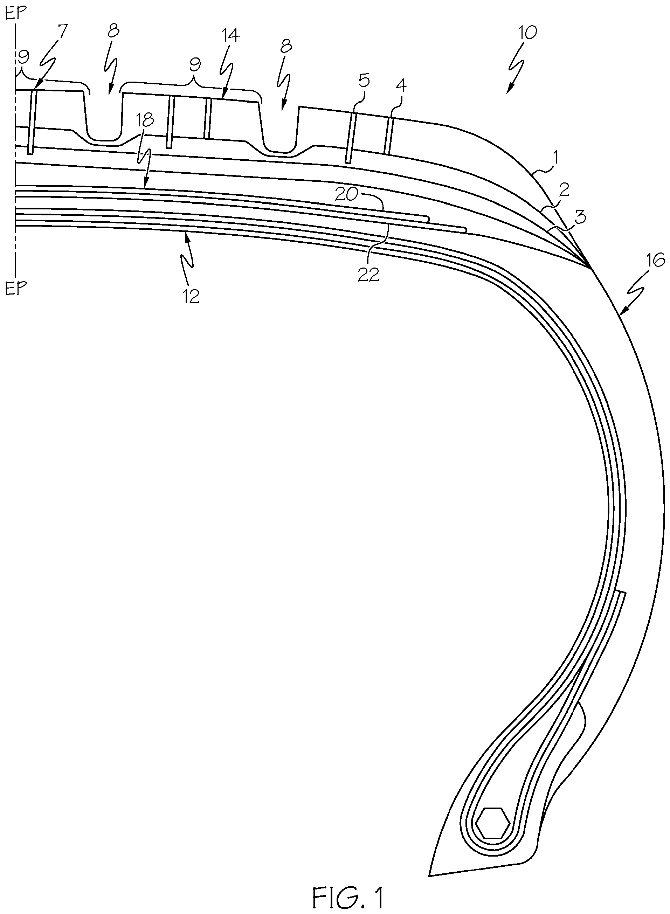

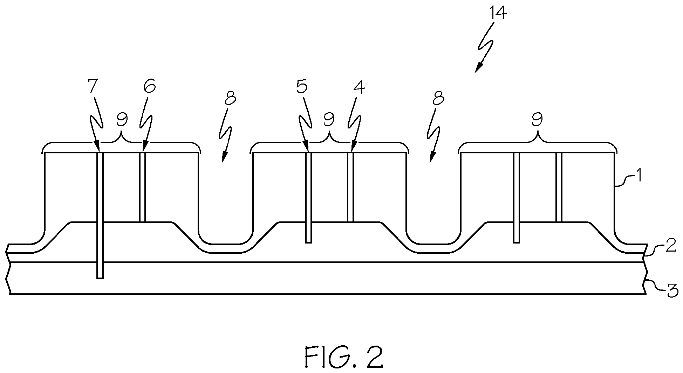

The present disclosure discloses a method to increase the sipe tearing resistance by modifying one or more rubber compositions in contact with the sipe. Preferably, sipe tearing resistance is improved without compromising treadwear tire performance of the tread cap layer. In one or more embodiments, the tire tread construction of multiple layers with the same or different rubber compositions is used to achieve the desired anti-tearing properties around the sipe structure. The tread portion of a tire, for example, as depicted in Figures 1 and 2, can be constructed of a tread cap layer composed of a tread cap composition, which has a surface for contacting the ground during tire operation. The tire tread portion can also include a tread base layer underlying and in direct contact with the tread cap layer. The tread base layer is composed of a tread base composition, which can be different than the tread cap composition. The tire tread portion may further have an under tread layer underlying and in direct contact with the tread base layer. The under tread layer is composed of an under tread composition, which can have a rubber composition different from or the same as the tread base composition, if present, or tread cap composition.

The layers of the tread portion, e.g., cap, base and under tread, are composed of rubber-containing compositions. The compositions that make up the layers of the tread portion can include any suitable polymer for tread rubber, e.g., natural rubber, synthetic rubber, or a combination thereof. As used herein, the terms elastomer and rubber will be used interchangeably. Examples of polymers that may be used in the compositions described herein include, but are not limited to, natural rubber, synthetic polyisoprene rubber, styrene-butadiene rubber (SBR), styrene-isoprene rubber, styrene-isoprene-butadiene rubber, butadiene-isoprene-styrene terpolymer, butadiene-isoprene rubber, polybutadiene, neoprene, acrylonitrile-butadiene rubber (NBR), ethylene-propylene rubber, ethylene-propylene terpolymer (EPDM), chlorinated polyethylene-propylene rubbers, terafluoroethylene-propylene rubber and combinations thereof. In one embodiment, the tread rubber compositions can include only natural rubber. A mixture of two or more polymers may be used, for example, the tread rubber compositions may include a mixture of natural rubber and synthetic rubber (e.g., styrene-butadiene rubber or polybutadiene rubber).

In one or more embodiments, the tread portion layers can include compositions having from 10 to 100 phr of styrene butadiene rubber, from 10 to 100 phr of poisoprene rubber, from 5 phr to 75 phr polybutadiene rubber, or from 0 to 100 phr of natural rubber.

It can be desirable to use natural rubber to achieve sufficient sipe tearing resistance for the tread cap and tread base layers. The present disclosure further addresses alternative tire tread portion construction and sipe depth designs for increasing amounts of synthetic rubbers to wholly or partially replace nature rubber for the tread cap and tread base layers and achieve the desired resistance to sipe tearing. Thus, in one or more embodiments, a tread portion layer can contain less than 50 phr, less than 30 phr, less than 20 phr, less than 10 phr, less than 5 phr or 0 phr of natural rubber.

In one or more embodiments, the tread portion layers can include compositions having one or more reinforcing fillers. The filler may be selected from the group consisting of carbon black, silica, and mixtures thereof. The total amount of filler may be from 1 to 200 phr, alternatively from 5 to 125 phr, from 10 phr to 100 phr, from 30 to 80 phr, from 40 to 75 phr, or from 40 to 70 phr.

Carbon black, when present, may be used in an amount of 1 to 200 phr, in an amount of 5 to 100 phr, in an amount of 15 to 90 phr, or alternatively in an amount of 30 to 80 phr. Suitable carbon blacks include commonly available, commercially-produced carbon blacks, but those having a surface area of at least 20 m²/g, or preferably, at least 35 m²/g and up are preferred. Among useful carbon blacks are furnace blacks, channel blacks, and lamp blacks. A mixture of two or more carbon blacks can be used. Exemplary carbon blacks include, but are not limited to, N-110, N-220, N-339, N-330, N-352, N-550, N-660, as designated by ASTM D-1765-82a.

Examples of reinforcing silica fillers which can be used include wet silica (hydrated silicic acid), dry silica (anhydrous silicic acid), chemically pretreated silica, calcium silicate, and the like. Among these, precipitated amorphous wet-process, hydrated silicas are preferred. Silica can be employed in an amount of 1 to 125 phr, in an amount of 5 to 100 phr, or alternatively in an amount of 30 to 80 phr. The useful upper range is limited by the high viscosity imparted by fillers of this type. Some of the commercially available silicas which can be used include, but are not limited to, HiSil 190, HiSil 210, HiSil 215, HiSil 233, HiSil 243, and the like, produced by PPG Industries (Pittsburgh, Pa.). A number of useful commercial grades of different silicas are also available from DeGussa Corporation (e.g., VN2, VN3), Solvay International Chemical Group (e.g., Zeosil 1165 MP0), and J. M. Huber Corporation.

The surface of the carbon black and/or silica may optionally be treated or modified to improve the affinity to particular types of polymers. Such surface treatments and modifications are well known to those skilled in the art.

In one or more embodiments, the tread portion layers can include compositions having zinc oxide in an amount of 0.1 to 10 phr, from 1 to 7 phr, or from 2 to 5 phr. Other ingredients that may be added to the tread rubber composition include, but are not limited to, oils, waxes, scorch inhibiting agents, tackifying resins, reinforcing resins, fatty acids such as stearic acid, and peptizers. These ingredients are known in the art, and may be added in appropriate amounts based on the desired physical and mechanical properties of the rubber composition.

Vulcanizing agents and vulcanization accelerators may also be added to the tread portion compositions. Suitable vulcanizing agents and vulcanization accelerators are known in the art, and may be added in appropriate amounts based on the desired physical, mechanical, and cure rate properties of the rubber compositions. Examples of vulcanizing agents include sulfur and sulfur donating compounds. The amount of the vulcanizing agent used in the rubber compositions may, in certain embodiments, be from 0.1 to 10 phr, or from 1 to 5 parts by weight per 100 phr.

When utilized, the particular vulcanization accelerator is not particularly limited. Numerous accelerators are known in the art and include, but are not limited to, diphenyl guanidine (DPG), tetramethylthiuram disulfide (TMTD), 4,4'-dithiodimorpholine (DTDM), tetrabutylthiuram disulfide (TBTD), benzothiazyl disulfide (MBTS), 2-(morpholinothio)benzothiazole (MBS), N-tert-butyl-2-benzothiazole sulfonamide (TBBS), N-cyclohexyl-2-benzothiazole sulfonamide (CBS), and mixtures thereof.

One or more compositions making up the layers of the tread portion can include a platelet type filler, for example talc, for enhancing the sipe tear resistance in the tread portion. Any suitable talc or grade of talc can be used in the rubber compositions of the tread portion. In one embodiment, the tread cap composition includes a platelet type filler. The tread cap composition has less than 0.5 phr of platelet filler. In another example, the tread cap composition is substantially free of a platelet filler or contains less than 0.1 phr or less than 0.05 phr of a platelet filler. In another example, the tread cap composition contains no platelet filler and is entirely free of platelet filler. The absence of a platelet filler from the tread cap is preferable to enhance tread wear and performance.

In another embodiment, the tread base composition can include 0.5 to 40 phr, from 1 to 30 phr, from 1 to 20 phr, or from 1 to 10 phr of a platelet filler such as talc. To the extent a sipe in the tread portion terminates or has a closed end in or contacting the tread base layer, or alternatively is present or passes through the tread base layer, the tread base composition preferably contains at least 1 phr of platelet filler. In another embodiment, the under tread composition can include 0.5 to 40 phr, from 1 to 30 phr, from 1 to 20 phr, or from 1 to 10 phr of platelet filler. To the extent a sipe in the tread portion terminates or has a closed end in or contacting the under tread layer, the under tread composition preferably contains at least 1 phr of platelet filler.

That is, the sipes in the tread portion of the tire have an open end that touches the ground at the surface of the tread, and a closed or terminating end that extends radically inwardly into the tread portion (e.g., the tread base layer, under tread layer, or combination of both). The sipe depth can be designed to extend the closed end of the sipe below the tread cap layer to allow the closed end of the sipe to contact the tread base layer, extend into, wholly or partially, the tread base layer and terminate there, or extend through the tread base layer and contact the under tread layer, or extend into, wholly or partially, the under tread layer and terminate there.

In one or more embodiments, the tread cap composition can contain 0 phr of platelet filler, and the tread base composition and/or the under tread composition can contain talc in the ranges described above, and preferably greater than 1 phr of platelet filler. In one example, the tread cap composition is free of talc and both of the tread base and under tread compositions contain talc in the ranges described above. In the event of the tread base and under tread compositions contain platelet filler, the platelet filler loading in each composition can be the same. In another example, the tread cap and tread base compositions can contain less than 0.5 phr of platelet filler or be free of platelet filler and the under tread composition can contain platelet filler in the ranges described above. In this example, it is preferred that one or more sipes terminate in or contact the under tread layer.

In one or more embodiments, the closed end of a sipe can be rounded such that a sipe terminates at or near an interface of layers such as the interface of a tread cap and tread base layers or a tread base and under tread layers. A sipe terminating at the interface of two layers can be positioned such that the terminating end contacts both layers at the interface. The layers in contact with the terminating end of the sipe, or alternatively the open area of the sipe directly above the terminating end, preferably contain platelet filler above 1 phr or in the ranges described above. In one example, the layers in contact with the terminating end of the sipe or the sipe portion near the terminating end can have identical platelet filler loading to enhance the tear resistance of the rubber layers for reducing sipe tearing during operation.

In one or more embodiments, the talc is selected as the platelet filler for the rubber compositions in contact or near the sipe closed end. Talc used in the rubber compositions is preferably a platelet or platy type of talc and can have one or more of the following properties. Talc can have a Hegman fineness in the range of 4 to 7, or 5 to 6.5 or 5.5 to 6.25. The talc can have a median particle size in the range of 1 to 10 microns, 1.5 to 8 microns, 2 to 6 microns, or 2.5, 3, 3.5, 4, 4.5 or 5 microns. In another example, the talc can have a surface area in the range of 5 to 20 m²/g, or 8 to 18 m²/g, or 10 to 15 m²/g , or 11, 12, 13, or 14 m²/g. In another example, the talc can have a loose bulk density in the range of 5 to 15 1bs/ft³, or 6 to 12 1bs/ft³, or 7, 8, 9, 10 or 11 1bs/ft³.

In another embodiment, the talc included in the rubber compositions of the tread portion can include surface modified talc. Talc and polymer matrix have low compatibility due to the hydrophilic nature of talc and the hydrophobic nature of a polymer matrix. The low compatibility can reduce the dispersion of talc in the rubber matrix and for a weak adhesion between talc and the polymer matrix. The compatibility between the polymer matric and talc can be improved with a modification of the surface of the talc so it may interact with polymer matrix either physically or chemically, and therefore further improve the talc dispersion in the rubber composition and enhance the polymer/talc interaction.

In one example, the talc surface can be modified with a coupling agent and /or a compatibilizer, or by usage of a functionalized polymer. The surface modification of talc can be achieved either by pretreatment of talc with different coupling agents and / or compatibilizers before the mixing the talc into the rubber composition, or by in-situ treatment of the talc during the mixing by addition of both talc and the coupling agents into the mixer, preferably at the same non-productive mixing stage.

The coupling agent for surface modification of talc may be a silane coupling agent, including but not limited to, bis(triethoxysilylpropyl) disulfide, bis(triethoxysilylpropyl) tetrasulfide, (3-mercaptopropyl)triethoxysilane, or (3-mercaptopropyl)trimethoxysilane. The chemical structures of different silane coupling agents are shown below as Scheme 1. One moiety, the ethoxysilane or methoxysilane of the silane coupling agent can chemically react with the talc surface and form chemical bonds. Another moiety, the polysulfide or mecapto group of the silane coupling agent can readily react with the rubber matrix during the tire curing process. 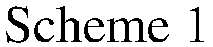
a. 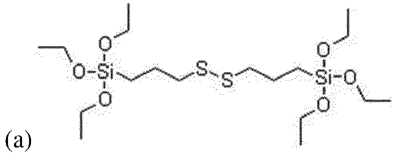
b. 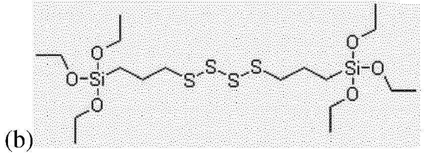
c. 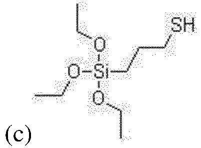
d.

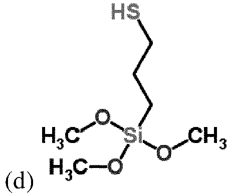

Scheme 1. Schematic representation of the chemical structures of the silane coupling agents for talc: (a) bis(triethoxysilylpropyl) disulfide; (b) bis(triethoxysilylpropyl) tetrasulfide; (c) (3-mercaptopropyl)triethoxysilane; and (d) (3-mercapto-propyl)trimethoxysilane.

Other coupling agents may include but not limited to titanate coupling agents, such as (OC-6-22)-tris[2-[(2-aminoethyl)amino]ethanolato-O][2,2-bis[(2-propenyloxy)methyl]-1-butanolato-O,O',O"]titanium; polyoxyethylene glycol; acetoxy coupling agents, such as acetic anhydride; and (3-aminopropyl)triethoxysilane. The chemical structures are shown below in the Scheme 2. These coupling agents may physical interact with talc and improve its compatibility with polymer matrix and therefore improve the talc dispersion and enhance the polymer and talc interaction. 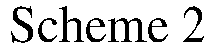
a.

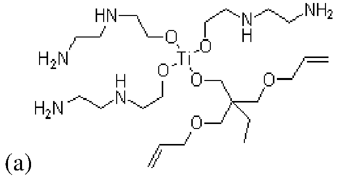

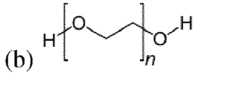

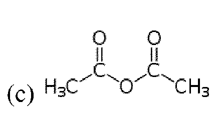

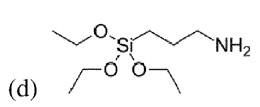

Scheme 2. Representation of chemical structures of different coupling agents for talc: (a) (OC-6-22)-tris[2-[(2-aminoethyl)amino]ethanolato-O][2,2-bis[(2-propenyloxy)methyl]-1-butanolato-O,O',O"]titanium; (b) polyoxyethylene glycol; (c) acetic anhydride; and (d) (3-aminopropyl)triethoxysilane.

Functionalized polymers may be used in the rubber compositions of the tread portion to improve the talc dispersion and to enhance the polymer and talc interaction. The functionalized polymers may include, but not limited to, functionalized solution styrene butadiene rubber, polyisoprene rubber, and polybutadiene rubber. The functionalized polymers may have one end functional group per chain using functional initiator or functional terminator during polymerization. The functionalized polymers may be difunctionalized at both chain ends using both functional initiator and functional terminator. The functionalized polymers may contain more than two functional groups per chain using in-chain functionalization approach during polymerization or post polymerization stage. These functional groups on the polymer chains include, but not limited to, ethoxysilane or methoxysilane end or in-chain functional groups. The functional groups can physically or chemically react with the talc surface and increase the compatibilization between polymer and talc.

In one example, for natural rubber and polyisoprene rubber, the functionalization can include epoxidation. The epoxidized natural rubber and polyisoprene rubber have higher compatibility with talc surface due to their physical interaction. Examples of commercial grades of epoxidized natural rubber include, but not limited to, Epoxyprene 25, Epoxyprene 50, ENR-25, ENR-50 and ENR-75 from Sanyo Corporation, Malaysian Rubber Board, and other suppliers.

In another embodiment, examples of functionalized solution styrene butadiene rubbers which may be used to for talc rubber compositions may be selected from a group of commercially available polymers, include, but not limited to, SPRINTAN SLR series, such as SPRINTAN SLR-4601, SLR-4602, SLR-4633, and P6204M from Trinseo; JSR HPR350 and JSR HPR840 from JSR Corporation; Nipol NS 612 and NS 616 (NS 460, NS 522) from Zeon; Kumho SOL-5270H and SOL-5270S from Kumho Petrochemical; and BUNA® FX3234-2HM and BUNA® PBR4078 from Lanxess. A number of useful commercial grades of different functionalized styrene butadiene rubbers are also available from LG Chem, Sumitomo, Sinopec, CNPC Petrochina, Asahi Kasei Chemicals.

The compositions forming the tread portion of a tire, for example the tread cap, tread base and the under tread rubber compositions, may be formed by mixing the ingredients together by methods known in the art, such as, for example, by kneading the ingredients together in a Banbury mixer. For example, the tread rubber composition may be mixed in at least two mixing stages. The first stage may be a mixing stage where no vulcanizing agents or vulcanization accelerators are added, commonly referred to by those skilled in the art as a non-productive mixing stage. In certain embodiments, more than one non-productive mixing stage may be used. The final stage may be a mixing stage where the vulcanizing agents and vulcanization accelerators are added, commonly referred to by those skilled in the art as a productive mixing stage. The non-productive mixing stage(s) may be conducted at a temperature of 130° C to 200° C, or 135° C to 175° C. The productive mixing stage may be conducted at a temperature below the vulcanization temperature in order to avoid unwanted pre-cure of the rubber composition. Therefore, the temperature of the productive mixing stage should not typically exceed 120° C and is typically 40° C to 120° C, or 60° C to 110° C and, especially, 75° C to 100° C.

Examples of a pneumatic tire according to the present disclosure are shown in Figures 1 and 2. As shown in FIG. 1, the tire 10 can be a vehicle tire, such as radial passenger, truck, off-road and race tires, and can be constructed in a manner conventional in the art. The tire 10 can also include those used for aircraft, industrial vehicles (e.g., vans), heavy vehicles, buses, road transport machinery (e.g., tractors, trailers), off-road vehicles, agricultural machinery or construction machinery, two-wheeled vehicles (e.g., motorcycles), and other transport or handling vehicles. The tire 10 includes a tire carcass 12, a tread portion 14, a sidewall assembly 16 and a belt structure or assembly 18 arranged between the tread portion 14 and tire carcass 12. As shown in FIG. 1, only half of the tire 10 is depicted with the other half being the same as the depicted half.

The belt assembly 18 is positioned circumferentially about the radial outer surface of the tire carcass 12 and beneath the tread 14. The belt assembly 18 can provide lateral stiffness across the belt assembly width and reduce lifting of the tread portion 14 from the road surface during rolling. In the embodiment illustrated, the belt assembly 18 can include one or more belt plies 20, 22. The belt plies can include reinforcing components, for example, cords, wires or combination of both made of a non-metal material. In certain embodiments, the reinforcing component may be in different forms, for example, a unitary cord (unit cord), a film (e.g., a strip or band), a multitude of cords that can be twisted together (e.g., a cable) or generally parallel to one another (e.g., a bundle of cords or assembly of fibers).

The reinforcing component, for example cords, can be oriented at any desirable angle with respect to the mid-circumferential center-plane of the tire 10, for instance, in the range of 18 to 26 degrees. In the embodiment that two belt plies are present in the tire, for example, plies 20, 22, the reinforcing components can be oriented in opposite directions from another ply layered above or below. The one or more plies, e.g., 20, 22, can be single cut layers, and preferably do not have folded lateral edges.

The reinforcing component of the belt ply, disposed within the belt skim, can be a nonmetal material. For example, the reinforcing component can include fiberglass, aramid, rayon, polyester, PEN, PET, PVA or combinations thereof.

The belt plies 20, 22 can include a belt skim. The belt skim can surround a portion of a reinforcing component surface or the entire reinforcing component such that the reinforcing component or plurality of components is encased in the belt skim. The belt skim can be in direct contact with the reinforcing component and/or multiple reinforcing components. Alternatively, an intermediate layer or other coating can be arranged between the reinforcing component and/or multiple reinforcing components and the belt skim. The belt skim can be a ply-wide layer.

The tire tread portion 14 may be practiced in the form of the tread on a new tire or practiced in the form of the tread for retreading purposes. The tire tread portion 14 has a tread cap layer 1 and a tread base layer 2, and it may further contain an under tread layer 3 as depicted in FIGS. 1 and 2. The tread cap layer 1 is the outermost radial component of the tread portion 14 and contains a ground-contacting surface. The tread cap layer 1 overlies and directly contacts the tread base layer 2. The tread cap layer 1 is shown with at least two grooves 8 that extend radially inward towards the tread base layer 2. As shown, the base of the grooves 8 of the tread cap layer 1 do not contact or extend into the tread base layer 2. The tread cap layer 1 has a tread design having one or more ribs 9 positioned adjacent the grooves 8, wherein the ribs 9 form the side walls of grooves 8.

Sipes 4, 5, 7 are shown in FIG. 1 at varying depths and locations in the tread portion 14. The sipes 4, 5, 7 have open ends facing the ground-contacting surface of the tread cap layer 1 and closed or terminating ends positioned radially inward. Sipe 4 extends from the ground-contacting surface of layer 1 and terminates with a closed end at the interface of layers 1 and 2 and thus the closed end of sipe 4 contacts the radially outermost surface of the tread base layer 2 at its interface with layer 1. Sipe 5 extends from the ground-contacting surface of layer 1 and terminates with a closed end within the tread base layer 2. Sipe 7 extends from the ground-contacting surface of layer 1, entirely through tread base layer 2, and terminates with a closed end within the under tread layer 3. Although not shown, sipes in the tread portion 14 can terminate in the tread cap layer 1 and not penetrate into underlying areas, for example, the tread base layer 2 or under tread layer 3.

FIG. 1 further shows the tread portion 14 having a tread base layer 2 arranged between the tread cap layer 1 and the under tread layer 3. As shown, the tread base layer 2 is in direct contact with both layers 1, 3 along its entire length. The tread base layer 2 can provide support to the cap layer 1, for example, in a retreading process. Preferably, the tread base layer 2 forms an intermediate layer such that the cap layer 1 does not contact or substantially contact the under tread layer 3. Below the tread base layer 2 is the under tread layer 3, which overlies and is in contact with the belt assembly or the belt skim. The tread base layer 2 and under tread layer 3 can have thicknesses as conventional in the art.

In FIG. 2, the tread portion 14 is characterized by circumferentially extending ribs 9 in the tread cap layer 1. Depending on the tread pattern design, typically, the tread portion 14 may have two to nine circumferentially extending ribs, with three to five ribs being preferred. As shown, the tread portion 14 contains at least one, and generally two or more, grooves 8 that define the lateral edges of the accompanying ribs 9. For purposes herein, rib is intended to mean a circumferentially extending blocks or partially extending blocks of rubber on the tread which is defined by the at least one circumferential wide groove and either a second such groove or a lateral edge of the tread cap layer 1.

As shown in FIG. 2, the tread ribs 9 contain one or more or a plurality of sipes 4, 5, 6, 7. The sipes may extend circumferentially, laterally or at any diagonal angles on the tread ribs or in the tread cap layer 1 in a straight, curved, or zig-zag manner. The sipes may all have the same depth or be at different depths. The sipes are present at conventional widths. As depicted in FIG. 2, the sipes may be at a depth for contacting the tread base layer 2. For example, sipe 4 extends to or partially into the tread based layer 2 and its closed end terminates at or near the interface of layers 1 and 2, whereas sipe 5 extends entirely through layer 1 and terminates entirely within the tread base layer 2. Sipe 6 has the same depth as sipe 4 but is positioned in an adjacent rib 9 in the tread cap layer 1. Also shown is sipe 7 that extends entirely through layers 1 and 2 and its closed end terminates entirely within the under tread layer 3.

The remaining features of the tread depicted in FIGS. 1 and 2 illustrate those features conventional to those skilled in the art.

All references, including but not limited to patents, patent applications, and non-patent literature are hereby incorporated by reference herein in their entirety.

While various aspects and embodiments of the compositions and methods have been disclosed herein, other aspects and embodiments will be apparent to those skilled in the art. The various aspects and embodiments disclosed herein are for purposes of illustration and are not intended to be limiting, with the true scope and spirit being indicated by the claims.

## Claims

1. A pneumatic tire comprising:
a tread portion, the tread portion comprising a tread cap layer and a tread base layer;
the tread cap layer comprising a ground-contact surface;
the tread portion comprising a sipe comprising an open end and a closed end, the sipe extending radially inward from the ground-contacting surface of the tread portion to at least the tread base layer;
the tread cap layer being composed of a tread cap composition, the tread cap composition comprising 100 parts of at least one diene-based elastomer and less than 0.5 parts by weight of talc, based on 100 parts by weight of the elastomer; and
the tread base layer underlying the tread cap layer, and the tread base layer being composed of a tread base composition, the tread base composition comprising 100 parts of at least one diene-based elastomer and a platelet type filler, the platelet type filler in the tread base composition being present in the range of 0.5 to 20 parts by weight based on 100 parts by weight of the elastomer in the tread base composition.

2. The pneumatic tire of claim 1, the closed end of the sipe is in contact with the tread base composition.

3. The pneumatic tire of claim 1 or claim 2, the tread portion further comprising an under tread layer, the under tread layer underlying the tread base layer, and the under tread layer being composed of an under tread composition.

4. The pneumatic tire of claim 3, the closed end of the sipe is in contact with the under tread layer.

5. The pneumatic tire of claim 3 or claim 4, the under tread composition being substantially free of a platelet type filler.

6. The pneumatic tire of any one of claims 1-5, the platelet type filler being talc.

7. The pneumatic tire of any one of claims 1-6, the tread cap composition being substantially free of a platelet type filler.

8. The pneumatic tire of any one of claims 1-7, the platelet type filler being talc comprising a Hegman fineness of 4 to 7.

9. The pneumatic tire of any one of claims 1-8, the platelet type filler being selected from the group consisting of talc, clay, mica and graphene.

10. The pneumatic tire of any one of claims 1-9, the talc in the tread base layer comprising at least one of the properties of a mean particle size diameter in the range of 1 to 10 microns or a surface area of 5 to 20 m²/g.

11. The pneumatic tire of any one of claims 1-10, the tread base composition further comprising at least one grade of carbon black in the range from 15 to 80 parts by weight, based on 100 parts by weight of the elastomer.

12. The pneumatic tire of any one of claims 1-11, the tread cap layer being in contact with the tread base layer.

13. The pneumatic tire of any one of claims 3-5, the tread base layer being in contact with the under tread layer.

14. The pneumatic tire of any one of claims 1-13, the tread cap composition further comprising a reinforcing filler, the reinforcing filler comprising carbon black or silica.

15. The pneumatic tire of claim 14, the reinforcing filler in the tread cap composition being in the range of 25 to 125 parts by weight, based on 100 parts by weight of the elastomer.

## Patentansprüche

1. Luftreifen, umfassend:
einen Laufflächenabschnitt, wobei der Laufflächenabschnitt eine Laufflächendeckschicht und eine Laufflächenbasisschicht umfasst; wobei die Laufflächendeckschicht eine Bodenkontaktoberfläche umfasst;
wobei der Laufflächenabschnitt eine Lamelle umfasst, die ein offenes Ende und ein geschlossenes Ende umfasst, wobei sich die Lamelle von der Bodenkontaktoberfläche des Laufflächenabschnitts radial nach innen zu mindestens der Laufflächenbasisschicht erstreckt;
wobei die Laufflächendeckschicht aus einer Laufflächendeckenzusammensetzung zusammengesetzt ist, wobei die Laufflächendeckenzusammensetzung 100 Teile mindestens eines dienbasierten Elastomers und weniger als 0,5 Gewichtsteile Talkum, bezogen auf 100 Gewichtsteile des Elastomers, umfasst; und
wobei die Laufflächenbasisschicht unter der Laufflächendeckschicht liegt und die Laufflächenbasisschicht aus einer Laufflächenbasiszusammensetzung zusammengesetzt ist, wobei die Laufflächenbasiszusammensetzung 100 Teile mindestens eines dienbasierten Elastomers und einen plättchenartigen Füllstoffs umfasst, wobei der plättchenartige Füllstoff in der Laufflächenbasiszusammensetzung im Bereich von 0,5 bis 20 Gewichtsteilen, bezogen auf 100 Gewichtsteile des Elastomers in der Laufflächenbasiszusammensetzung, vorliegt.

2. Luftreifen nach Anspruch 1, wobei das geschlossene Ende der Lamelle mit der Laufflächenbasiszusammensetzung in Kontakt steht.

3. Luftreifen nach Anspruch 1 oder Anspruch 2, wobei der Laufflächenabschnitt ferner eine Laufflächenunterschicht umfasst, wobei die Laufflächenunterschicht unter der Laufflächenbasisschicht liegt und die Laufflächenunterschicht aus einer Laufflächenuntermaterialzusammensetzung zusammengesetzt ist.

4. Luftreifen nach Anspruch 3, wobei das geschlossene Ende der Lamelle mit der Laufflächenunterschicht in Kontakt steht.

5. Luftreifen nach Anspruch 3 oder Anspruch 4, wobei die Laufflächenuntermaterialzusammensetzung im Wesentlichen frei von einem plättchenartigen Füllstoff ist.

6. Luftreifen nach einem der Ansprüche 1 bis 5, wobei der plättchenartige Füllstoff Talkum ist.

7. Luftreifen nach einem der Ansprüche 1 bis 6, wobei die Laufflächendeckzusammensetzung im Wesentlichen frei von einem plättchenartigen Füllstoff ist.

8. Luftreifen nach einem der Ansprüche 1 bis 7, wobei der plättchenartige Füllstoff Talkum ist, der einen Hegman-Feinheitsgrad von 4 bis 7 umfasst.

9. Luftreifen nach einem der Ansprüche 1 bis 8, wobei der plättchenartige Füllstoff ausgewählt ist aus der Gruppe bestehend aus Talkum, Ton, Glimmer und Graphen.

10. Luftreifen nach einem der Ansprüche 1 bis 9, wobei das Talkum in der Laufflächenbasisschicht mindestens eine der Eigenschaften von einem mittleren Teilchengrößendurchmesser im Bereich von 1 bis 10 Mikrometer oder einer Oberfläche von 5 bis 20 m²/g umfasst.

11. Luftreifen nach einem der Ansprüche 1 bis 10, wobei die Laufflächenbasiszusammensetzung ferner mindestens eine Rußqualität im Bereich von 15 bis 80 Gewichtsteilen, bezogen auf 100 Gewichtsteile des Elastomers, umfasst.

12. Luftreifen nach einem der Ansprüche 1 bis 11, wobei die Laufflächendeckschicht mit der Laufflächenbasisschicht in Kontakt ist.

13. Luftreifen nach einem der Ansprüche 3 bis 5, wobei die Laufflächenbasisschicht mit der Laufflächenunterschicht in Kontakt ist.

14. Luftreifen nach einem der Ansprüche 1 bis 13, wobei die Laufflächendeckzusammensetzung ferner einen Verstärkungsfüllstoff umfasst, wobei der Verstärkungsfüllstoff Ruß oder Siliziumdioxid umfasst.

15. Luftreifen nach Anspruch 14, wobei der Verstärkungsfüllstoff in der Laufflächendeckzusammensetzung im Bereich von 25 bis 125 Gewichtsteilen, bezogen auf 100 Gewichtsteile des Elastomers, liegt.

## Revendications

1. Pneumatique comprenant :
une partie de bande de roulement, la partie de bande de roulement comprenant une couche de recouvrement de bande de roulement et une couche de base de bande de roulement ; la couche de recouvrement de bande de roulement comprenant une surface de contact avec le sol ;
la partie de bande de roulement comprenant une lamelle comprenant une extrémité ouverte et une extrémité fermée, la lamelle s'étendant radialement vers l'intérieur depuis la surface de contact avec le sol de la partie de bande de roulement jusqu'à au moins la couche de base de bande de roulement ;
la couche de recouvrement de bande de roulement étant composée d'une composition de recouvrement de bande de roulement, la composition de recouvrement de bande de roulement comprenant 100 parties d'au moins un élastomère à base de diène et moins de 0,5 parties en poids de talc, sur la base de 100 parties en poids de l'élastomère ; et
la couche de base de bande de roulement étant sous-jacente à la couche de recouvrement de bande de roulement, et la couche de base de bande de roulement étant composée d'une composition de base de bande de roulement, la composition de base de bande de roulement comprenant 100 parties d'au moins un élastomère à base de diène et une charge de type plaquettaire, la charge de type plaquettaire dans la composition de base de bande de roulement étant présente dans la plage de 0,5 à 20 parties en poids sur la base de 100 parties en poids de l'élastomère dans la composition de base de bande de roulement.

2. Pneumatique selon la revendication 1, l'extrémité fermée de la lamelle est en contact avec la composition de base de bande de roulement.

3. Pneumatique selon la revendication 1 ou la revendication 2, la partie de bande de roulement comprenant en outre une couche de sous-bande de roulement, la couche de sous-bande de roulement se trouvant sous la couche de base de bande de roulement et la couche de sous-bande de roulement étant composée d'une composition de sous-bande de roulement.

4. Pneumatique selon la revendication 3, l'extrémité fermée de la lamelle est en contact avec la couche de sous-bande de roulement.

5. Pneumatique selon la revendication 3 ou la revendication 4, la composition de sous-bande de roulement étant sensiblement exempte de charge de type plaquettaire.

6. Pneumatique selon l'une quelconque des revendications 1 à 5, la charge de type plaquettaire étant du talc.

7. Pneumatique selon l'une quelconque des revendications 1 à 6, la composition de recouvrement de bande de roulement étant sensiblement exempte d'une charge de type plaquettaire.

8. Pneumatique selon l'une quelconque des revendications 1 à 7, la charge de type plaquettaire étant du talc comprenant une finesse d'Hegman de 4 à 7.

9. Pneumatique selon l'une quelconque des revendications 1 à 8, la charge de type plaquettaire étant choisie dans le groupe constitué par le talc, l'argile, le mica et le graphène.

10. Pneumatique selon l'une quelconque des revendications 1 à 9, le talc dans la couche de base de bande de roulement comprenant au moins une des propriétés d'un diamètre moyen de particule dans la plage de 1 à 10 microns ou une superficie de 5 à 20 m²/g.

11. Pneumatique selon l'une quelconque des revendications 1 à 10, la composition de base de bande de roulement comprenant en outre au moins une qualité de noir de carbone dans la plage de 15 à 80 parties en poids, sur la base de 100 parties en poids de l'élastomère.

12. Pneumatique selon l'une quelconque des revendications 1 à 11, la couche de recouvrement de bande de roulement étant en contact avec la couche de base de bande de roulement.

13. Pneumatique selon l'une quelconque des revendications 3 à 5, la couche de base de bande de roulement étant en contact avec la couche de sous-bande de roulement.

14. Pneumatique selon l'une quelconque des revendications 1 à 13, la composition de recouvrement de bande de roulement comprenant en outre une charge de renforcement, la charge de renforcement comprenant du noir de carbone ou de la silice.

15. Pneumatique selon la revendication 14, la charge de renforcement dans la composition de recouvrement de bande de roulement étant dans la plage de 25 à 125 parties en poids, sur la base de 100 parties en poids de l'élastomère.
